# EUROPEAN PATENT SPECIFICATION

(11) **EP 1 070 638 B1**
(45) Date of publication and mention of the grant of the patent: **01.09.2004**
(21) Application number: 00202232.5
(22) Date of filing: 26.06.2000
(51) Int. Cl.: B60R 9/10, B60R 9/06

(54) **Cycle carrier**
Fahrradträger
Porte-cycle

(30) Priority: 19.07.1999 NL 1012638
(43) Date of publication of application: 24.01.2001
(73) Proprietor: Herink, Johannes Benedictus Isedorus, 7595 BN Weerselo (NL)
(72) Inventor: Herink, Johannes Benedictus Isedorus, 7595 BN Weerselo (NL)
(74) Representative: Prins, Hendrik Willem

(56) References cited:
- EP-A- 0 669 225
- BE-A- 1 005 450
- DE-A- 3 300 439
- DE-A- 19 607 938
- DE-U- 9 420 632
- DE-U- 29 816 813
- GB-A- 2 260 111
- US-A- 4 274 568

## Description

The invention relates to a device for carrying cycles in accordance with the preamble of claim 1, as known from DE-A-1005450.

Such devices are known in many embodiments. All these known devices have the drawback that mounting of the device onto a vehicle and fixing of the cycles on the device is laborious and takes a long time. There are devices wherein the crank of a pedal pair of a cycle must be placed in a profile with C-shaped cross-sections. Since cycles normally have a weight of around 15 kg, it is difficult to place the rotatably moveable crank in the profile while the cycle is being lifted.

Other mounting systems are known wherein a number of special tools are necessary both to mount the cycle carrier on the vehicle and to place a cycle on the device. In addition to the drawback of the specially required tools arising in such devices, it is a further problem that through unskilled use of the tools the device is arranged unsafely on the vehicle or the cycle is placed unsafely on the device. This can lead to dangerous traffic situations.

It is an object of the invention to prevent the above stated drawbacks.

According to the invention the one coupling part comprises a vertically extending coupling pin and the other coupling part comprises an opening for coupling co-action with the coupling pin. Because the particular claimed coupling part is mounted on the cycle it becomes possible to effect a good coupling between the device and the cycle irrespective of the type of cycle. In known devices, wherein the crank is pushed into a profile, the coupling often depends on the form of the crank. This latter can moreover be damaged.

The coupling between the device and the cycle is created by means of a pin-hole connection. Because this coupling comprises two fixed, non-rotatable parts the cycle can be placed on the device in a rapid and simple manner. It is possible that the coupling part for mounting on the cycle be already arranged thereon in the factory where the cycle is manufactured.

Locking means are preferably arranged on the pin. This prevents the cycle falling off the device during transport with the vehicle due to for instance a bad road surface. The locking means can herein comprise a hole arranged in the pin and a locking pin placeable in the hole. It is further also possible for a padlock to be used instead of the locking pin, whereby the cycle can be locked onto the device.

In yet another embodiment according to the invention the coupling pin is height-adjustable. The coupling means can hereby be adapted to the size of a cycle.

In yet another embodiment the second coupling part is adapted for mounting at the position of the pedal pair of the cycle. The centre of gravity of the cycle lies in the vicinity of the pedal pair and, in view of the great forces exerted on a pedal pair during cycling, the frame is very strong at the position of the pedal pair, whereby a reliable coupling between the cycle and the device can be established.

Preferably the device can also be characterized in that the mounting means comprise:
- a towing hook rapid-action coupling which can be operated manually from outside and which is arranged fixedly on the frame;
- a coupling part which is adapted for fixing to the towing hook and co-acts couplingly with the towing hook rapid-action coupling.

A rapid and reliable mounting of the device on the vehicle is hereby ensured. For this purpose a once-only professional mounting of the coupling part onto the towing hook of a vehicle is required and further special tools are no longer required in order to mount the device on the towing hook of a vehicle each time and remove it therefrom.

In an embodiment of the invention at least one pin is arranged on the towing hook rapid-action coupling, which pin co-acts couplingly with a hole arranged in the coupling part. A simple coupling between the towing hook rapid-action coupling and the coupling part is hereby obtained.

These and other features of the invention will be further elucidated with reference to the annexed drawings.

Figure 1 shows a perspective view of a first embodiment of a device according to the invention.

Figure 2 shows in perspective view a detail of the device according to figure 1.

Figure 3 shows a perspective view of a second embodiment according to the invention.

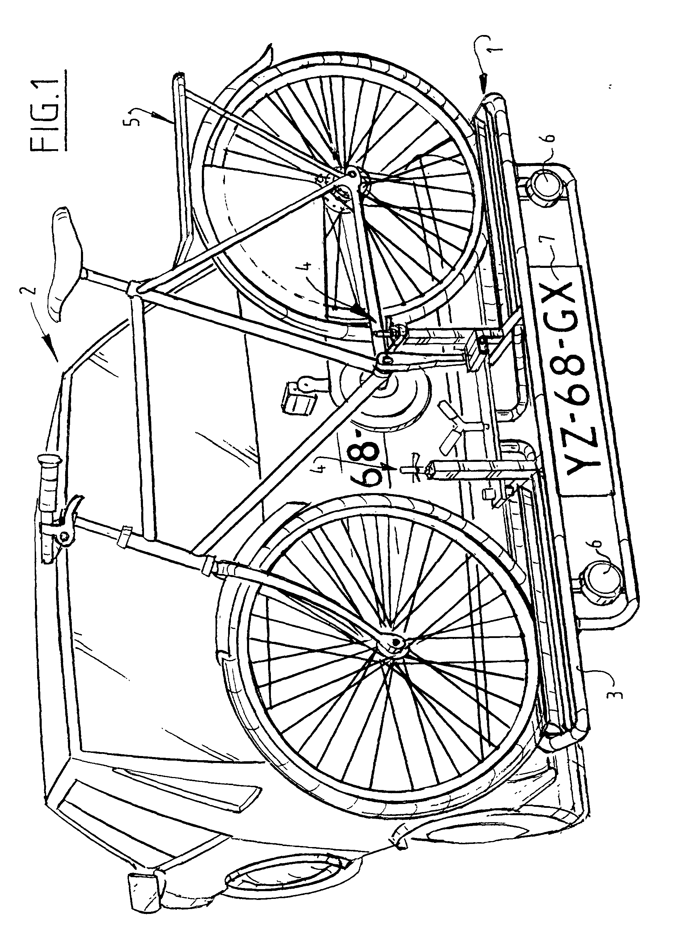

Figure 1 shows the device 1 according to the invention which is mounted on a vehicle 2. Device 1 comprises a frame 3 on which are arranged coupling means 4. A cycle 5 can be coupled to device 1 with these coupling means 4.

Further arranged on frame 3 of device 1 are rear lights 6 which are electrically connected to the rear lights of vehicle 2. A registration plate 7 is further arranged on device 1.

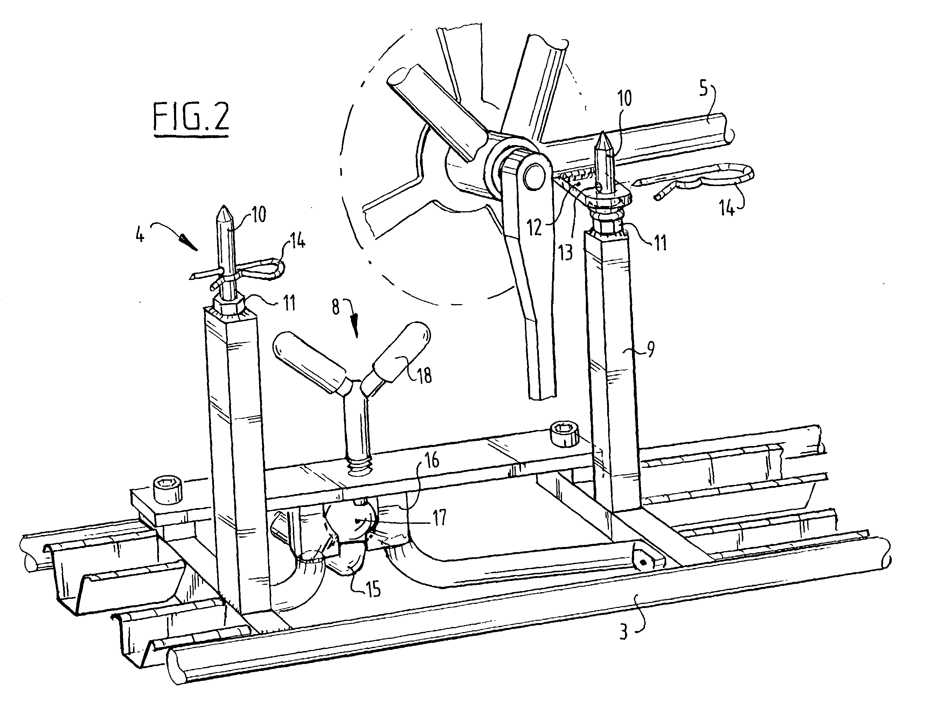

Figure 2 shows in detail the coupling means 4 and mounting means 8 of device 1. Coupling means 4 comprise a vertically protruding frame part 9 to which is fastened a pin 10. This pin 10 is arranged in frame part 9 by means of screw thread and can be adjusted in height by means of nut 11. Coupling means 4 further comprise a plate 12 which is arranged on cycle 5. In this plate 12 is arranged a hole through which pin 10 protrudes. A firm coupling between cycle 5 and device 1 is hereby obtained. For safety purposes a hole 13 can be further arranged in pin 10 through which a locking pin 14 can be placed.

Device 1 is arranged on a towing hook 15 of vehicle 2 by means of known mounting means 8. These mounting means 8 comprise a thick plate part 16 which lies against ball 17 of towing hook 15. By tightening a screw part 18 the plate part 16 is clamped against ball 17 of towing hook 15, whereby device 1 is arranged fixedly on towing hook 15. The reliability of this mounting depends inter alia on the tightening force of screw part 18. This mounting has the drawback that the ball of towing hook 15 is damaged by firm tightening of screw part 18.

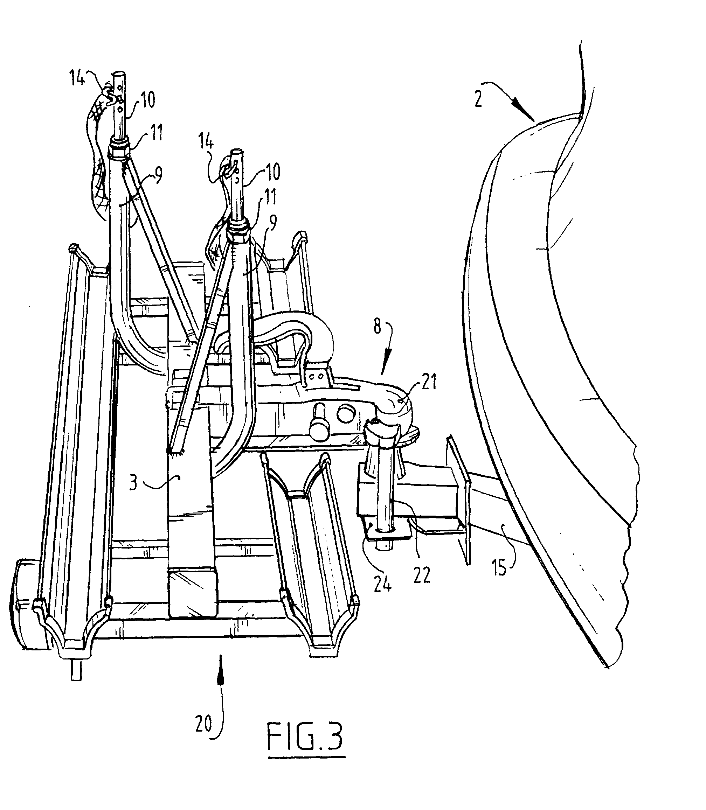

Figure 3 shows a second embodiment of a device 20. Parts corresponding with the embodiment according to figures 1 and 2 are designated in this figure with the same reference numerals.

Mounting means 8 for mounting on vehicle 2 are formed in this embodiment by a generally known towing hook rapid-action coupling 21 which is fixedly arranged on frame 3 of device 20. Since a towing hook rapid-action coupling 21 is freely rotatable round the ball of towing hook 15, at least one and preferably two vertically downward extending pins 22 are further arranged on towing hook coupling 21. These pins 22 protrude through an opening 23 in a coupling plate 24, which is mounted once-only on towing hook 15. With such mounting means the cycle carrier can be coupled to towing hook 15 as if it were a trailer.

Although in this embodiment the pin 10 is arranged on frame 3 and plate 12 with the hole is arranged on the cycle, it will of course be apparent that it is also possible to arrange the pin on the cycle, while a hole is arranged in frame 3.

## Claims

1. Device (1) for carrying cycles (5), which device (1) comprises:
- a frame (3) ;
- mounting means (8) arranged on the frame (3) for mounting the frame (3) on a towing hook (15) of a vehicle (2);
- coupling means (4) arranged on the frame (3) for coupling at least one cycle (5) to the frame (3);
- the coupling means (4)comprising a first coupling part (10) and a second coupling part (12) coacting therewith, wherein the first coupling part (10) is arranged on the frame (3) and the second coupling part (12) is adapted for fixing to the cycle (5),
**characterized in that**
the one coupling part (10) comprises a vertically extending coupling pin (10) and the other coupling part (12) comprises an opening for coupling co-action with the coupling pin (10).

2. Device as claimed in claim 1,
**characterized in that**
locking means (13, 14) are arranged on the coupling pin (10).

3. Device as claimed in claim 2,
**characterized in that**
the locking means (13, 14) comprise a hole (13) arranged in the coupling pin and a locking pin placeable in the hole.

4. Device as claimed in claim 1,
**characterized in that**
the coupling pin (10) is height-adjustable.

5. Device as claimed in claim 1,
**characterized in that**
the second coupling part (12) is adapted for mounting at the position of the pedal pair of the cycle.

6. Device (1) as claimed in any of the preceding claims,
**characterized in that**
the mounting means (8) comprise:
- a towing hook rapid-action coupling (21) which can be operated manually from outside and which is arranged fixedly on the frame (3);
- a coupling part (22, 23, 24) which is adapted for fixing to the towing hook and co-acts couplingly with the towing hook rapid-action coupling (21).

7. Device as claimed in claim 6,
**characterized in that**
at least one pin (22) is arranged on the towing hook rapid-action coupling (21), which pin (22) co-acts couplingly with a hole arranged in the coupling part (24).

## Patentansprüche

1. Vorrichtung (1) zum Tragen von Fahrrädern (5), wobei die Vorrichtung (1) folgendes umfaßt:
- ein Rahmen (3);
- ein am Rahmen (3) angebrachtes Montagemittel (8), um den Rahmen (3) am Abschlepphaken (15) eines Fahrzeugs (2) zu befestigen;
- ein am Rahmen (3) angebrachtes Kupplungsmittel (4), um wenigstens ein Fahrrad (5) mit dem Rahmen (3) zu koppeln;
- wobei das Kupplungsmittel (4) ein erstes Kupplungsteil (10) und ein zweites Kupplungsteil (12) aufweist, weiches mit dem ersten Teil zusammenwirkt, wobei das erste Kupplungsteil (10) am Rahmen (3) angebracht ist, und das zweite Kupplungsteil (12) zum Befestigen am Fahrrad (5) adaptiert ist,
**dadurch gekennzeichnet, daß**
das eine Kupplungsteil (10) einen sich vertikal erstreckenden Kupplungsstift (10) aufweist und das andere Kupplungsteil (12) eine Öffnung aufweist zum Zusammenbringen mit dem Kupplungsstift (10).

2. Vorrichtung gemäß Anspruch 1,
**dadurch gekennzeichnet, daß**
Sperrmittel (13, 14) am Kupplungsstift (10) angebracht sind.

3. Vorrichtung gemäß Anspruch 2,
**dadurch gekennzeichnet, daß**
das Sperrmittel (13, 14) ein Loch (13), welches im Kupplungsstift vorgesehen ist, und einen Sperrstift, der in das Loch eingeführt werden kann, umfaßt.

4. Vorrichtung gemäß Anspruch 1,
**dadurch gekennzeichnet, daß**
der Kupplungsstift (10) in der Höhe einstellbar ist.

5. Vorrichtung gemäß Anspruch 1,
**dadurch gekennzeichnet, daß**
das zweite Kupplungsteil (12) zum Befestigen an der Position des Pedalpaares des Fahrrads adaptiert ist.

6. Vorrichtung (1) gemäß einem der vorherigen Ansprüche,
**dadurch gekennzeichnet, daß**
das Montagemittel (8) folgendes umfaßt:
- eine Abschlepphaken-Schnellkupplung (21), die von außen von Hand betätigt werden kann und fest am Rahmen (3) angeordnet ist;
- ein Kupplungsteil (22, 23, 24), welches zur Befestigung am Abschlepphaken adaptiert ist und mit der Abschlepphaken-Schnellkupplung (21) kuppelnd zusammenwirkt.

7. Vorrichtung gemäß Anspruch 6,
**dadurch gekennzeichnet, daß**
wenigstens ein Stift (22) an der Abschlepphaken-Schnellkupplung (21) angebracht ist, wobei der Stift (22) kuppelnd zusammenwirkt mit einem im Kupplungsteil (24) vorhandenem Loch.

## Revendications

1. Dispositif (1) pour transporter des cycles (5), ledit dispositif (1) comprenant :
- une armature (3) ;
- un moyen de montage (8) agencé sur l'armature (3) pour monter l'armature (3) sur un crochet de remorque (15) d'un véhicule (2) ;
- un moyen d'accouplement (4) agencé sur l'armature (3) pour coupler au moins un cycle (5) à l'armature (3) ;
- le moyen d'accouplement (4) comprenant une première pièce d'accouplement (10) et une seconde pièce d'accouplement (12) coopérant avec celui-ci, dans lequel la première pièce d'accouplement (10) est agencée sur l'armature (3) et la seconde pièce d'accouplement (12) est adaptée pour être fixée sur le cycle (5),
**caractérisé en ce que** la pièce d'accouplement (10) comprend une goupille d'accouplement s'étendant verticalement (10) et l'autre pièce d'accouplement (12) comprend une ouverture en vue d'une action d'accouplement avec la goupille d'accouplement (10).

2. Dispositif selon la revendication 1, **caractérisé en ce que** des moyens de verrouillage (13, 14) sont agencés sur la goupille d'accouplement (10).

3. Dispositif selon la revendication 2, **caractérisé en ce que** les moyens de verrouillage (13, 14) comprennent un trou (13) agencé dans la goupille d'accouplement et une goupille de verrouillage pouvant être placée dans le trou.

4. Dispositif selon la revendication 1, **caractérisé en ce que** la goupille d'accouplement (10) est ajustable en hauteur.

5. Dispositif selon la revendication 1, **caractérisé en ce que** la seconde pièce d'accouplement (12) est adaptée pour être montée à l'emplacement de la paire de pédales du cycle.

6. Dispositif (1) selon l'une quelconque des revendications précédentes, **caractérisé en ce que** les moyens de montage (8) comprennent :
- un accouplement de crochet de remorque à action rapide (21) qui peut être actionné manuellement depuis l'extérieur et qui est agencé de manière fixe sur l'armature (3) ;
- une pièce d'accouplement (22, 23, 24) qui est adaptée pour être fixée sur le crochet de remorque et qui coopère de manière à se mettre en prise avec l'accouplement de crochet de remorque à action rapide (21).

7. Dispositif selon la revendication 6, **caractérisé en ce que** au moins une goupille (22) est agencée sur l'accouplement de crochet de remorque à action rapide (21), ladite goupille (22) coopérant de manière à se mettre en prise avec un trou agencé dans la pièce d'accouplement (24).
